# EUROPÄISCHE PATENTSCHRIFT

(11) **EP 1 000 889 B1**
(45) Veröffentlichungstag und Bekanntmachung des Hinweises auf die Patenterteilung: **14.08.2002**
(21) Anmeldenummer: 98120899.4
(22) Anmeldetag: 04.11.1998
(51) Int. Cl.: B65G 69/18

(54) **Vorrichtung zum Uebertragen fliessfähigen Materials**
Device for transferring flowable materials
Dispositif pour transférer des produits fluides

(43) Veröffentlichungstag der Anmeldung: 17.05.2000
(60) Teilanmeldung: 01120434.4
(73) Patentinhaber: AT Anlagetechnik AG, 3186 Düdingen (CH)
(72) Erfinder: Nussbaumer, Arthur, 3186 Düdingen (CH); Schneuwly, Markus, 3186 Düdingen (CH)
(74) Vertreter: Révy von Belvárd, Peter

(56) Entgegenhaltungen:
- EP-A- 0 847 946
- WO-A-94/19265
- WO-A-98/46505

## Beschreibung

Die Erfindung bezieht sich auf eine Vorrichtung zum Übertragen fliessfähigen Materials nach dem Oberbegriff des Anspruches 1.

Eine derartige Vorrichtung ist aus der US-A-5,351,864 bekannt geworden. Darin ersetzt die Saugeinrichtung andere, bekannte Einrichtungen, wie etwa einen den Deckel abhebenden Magneten nach der DE-B-1 188 882 oder auch mechanische Abhebeeinrichtungen, etwa nach der EP-A-0 847 946. All diesen bekannten Abhebeeinrichtungen ist aber gemeinsam, dass zwar einerseits der Deckel automatisch - und in der Annahme eines klaglosen Funktionierens - erfolgen soll, dass aber anderseits durch nichts gesichert oder überwacht wird, dass dem auch wirklich so ist. Dabei ist es an sich gleichgültig, ob es sich bei dem fliessfähigen Material um flüssiges Material oder um Schüttgut handelt, obwohl der letztere Fall für diese Art des Übertragens fliessfähigen Materials die Regel sein wird. Auch wird es sich bei dem vom Deckel abschliessbaren Übemahmeteil im allgemeinen um einen Zwischenbehälter (meist "IBC" = Intermediate Bulk Container) handeln, obwohl es sich dabei etwa um die Füllöffnung eines Abfüllschlauches handeln könnte, wie es in der EP-A-0 384 826 beschrieben ist.

Beispielsweise lassen sich drei klassische Fälle für die Vorrichtung nach der US-A-5,351,864 darlegen, bei der es zu einem Versagen kommt und kommen muss:
- Der Saugnapf ist abgenützt und/oder besitzt ein Loch, so dass sich der zum Abheben des Deckels nötige Saugdruck nicht aufbauen kann. Dies wird- je nach der Abrasivität des fliessfähigen Materials, den Betriebsbedingungen und der Betriebsdauer - regelmässig nach einer gewissen Betriebsdauer auftreten.
- Der Deckel ist mit Schüttgut oder anderem fliessfähigem Material verunreinigt, so dass der Saugnapf keinen festen Halt findet und daher der Deckel nicht abgehoben wird.
- Der Deckel liegt nicht völlig gerade bzw. nicht völlig senkrecht zur Betätigungsachse, so dass der Saugnapf nicht gleichmässig an ihm anliegt.

Diese Unzukömmlichkeiten liegen teilweise auch an der bisher verwendeten Ausgestaltung der mit Saugdruck arbeitenden Abhebeeinrichtung: Es ist ja klar, dass es sich bei solchen Vorrichtungen um relativ massive Konstruktionen handelt, so dass man bisher davon ausging, es müsse auch der Saugnapf entsprechend robust ausgebildet sein, um nicht durch zu grosse Nachgiebigkeit ein Verkanten des Deckels während des Aufsetzens zu bewirken. Deshalb war der Saugnapf im wesentlichen als aus einer die Saugöffnung umrandenden Erweiterung in eine Verengung übergehende Saugglocke ausgebildet, um dem Deckel nach dem Ansaugen nur keine Bewegungsmöglichkeit zu geben. Die geringe Bewegungsmöglichkeit und Flexibilität brachte es aber mit sich, dass die oben aufgezählten - und weitere - Unzukömmlichkeiten auftraten.

Dies lässt sich besonders auch an Hand der WO 94/19265 und der WO 98/46505 zeigen. Bei letzterer, beispielsweise, ist ein Saugnapf - zum Schutz vor Staub - relativ tief im Inneren des Verschlussgliedes untergebracht. Damit es den Deckel des Behälters überhaupt zu ergreifen vermag, muss dieser aufgewölbt sein, um nach oben in das Innere des Verschlussgliedes einzudringen. Diese Aufwölbung hat aber ihre Grenzen. Es ist aus den Zeichnungen der WO ersichtlich, dass der Saugnapf bei seiner Anlage an den Deckel (mit gutem Grund) praktisch nicht zusammengepresst wird, d.h. es genügt eine geringe Toleranz, und das Ansaugen ist nicht mehr gesichert. Zwar könnte man sich vielleicht vorstellen, den Saugnapf länger zu machen, so dass er elefantenrüsselartig vorsteht und damit sicher an der Oberfläche des Deckels anliegt. Dies aber zeigt gerade den Nachteil (und den Grund für die kurze Bemessung des Saugnapfes), da der Saugnapf jedenfalls und zwangsläufig einen geringeren Durchmesser als das Verschlussglied besitzt. Die oben geschilderte Gefahr des Verkantens ist also bei diesem Stand der Technik vorgegeben.

Dazu kommt noch die folgende, an die obigen Ausführungen anknüpfende Überlegung: der Deckel ist ja Teil eines Transportbehälters IBC. Solche Transportbehälter sind, naturgemäss, nicht immer völlig rein zu halten und sind den schweren Bedingungen des Indistriealltages ausgesetzt. Es kann somit leicht am Deckel zu einer Ansammlung von Schüttgut kommen, welche ein fehlerloses Ansaugen verhindert, wie es auch möglich ist, dass der Deckel - der ja nicht von allzuschwerer Bauart sein darf - im Betrieb leicht eingebeult wird, was wiederum ein gutes Ansaugen verhindert, da ja dann Teile der Fläche des Deckels nicht völlig gerade liegen, wie eingangs hervorgehoben).

Der Erfindung liegt daher die Aufgabe zugrunde, die oben geschilderten Funktionsfehler wirksam zu vermeiden, und dies gelingt erfindungsgemäss durch die kennzeichnenden Merkmale des Anspruches 1.

Im Rahmen der Erfindung ist also eine Überwachungseinrichtung für den Angriff am Dekkel vorgesehen, durch welche der Sitz des Deckels an der Abhebeeinrichtung entweder direkt über einen zugehörigen Sensor oder indirekt durch Bestimmen des sich mit dem Deckel aufbauenden Unterdrucks und/oder der Saugströmung überwachbar ist, und welche bei unrichtigem Sitz des Deckels an der Abhebeeinrichtung ein Signal an eine Auswerteeinrichtung abgibt. Der direkte Weg der Bestimmung wäre die Verwendung mindestens eines Lagesensors am Verschlussmittel, welcher beim beginnenden Abheben feststellt, ob der Deckel mitgeht und so seine Relativlage unverändert ist, oder ob er seine Lage verändert. Dies erfordert allerdings komplizierte Massnahmen, als wenn man sich einer indirekten Überwachung im obigen Sinne bedient, wobei eine Druckmessung einfacher und daher bevorzugter als eine Strömungsmessung ist. Gerade die oben genannten Fehlermöglichkeiten lassen sich ja so recht genau feststellen.

Hinsichtlich der Auswerteeinrichtung sind verschiedene Lösungen denkbar, beispielsweise die Initiierung eines Programms, welches einen neuerlichen Abhebeversuch unternimmt, allenfalls nach vorherigem Wegblasen von am Deckel möglicherweise vorhandenem Schüttgut, welches das Ansaugen und Abheben behindern könnte. Dies kann beispielsweise durch Einschalten eines Initiierungsschalters von Hand aus oder durch einen Andocksensor oder durch einen Lagesensor, wie er oben erwähnt wurde, erfolgen, der einen solchen Initiierungsschalter auslöst.

Die Überwachung kann vorzugsweise so erfolgen, dass der sich zusammen mit dem anliegenden Deckel aufbauende Unterdruck und/oder die Saugströmung überwachbar und zu diesem Zwecke an einer mit der Abhebeeinrichtung verbundenen Saugleitung mindestens eine zugehörige Sensoreinrichtung vorgesehen sein, durch welche das genannte Signal an die Auswerteeinrichtung abgebbar Ist.

Weitere Einzelheiten der Erfindung ergeben sich an Hand der nachfolgenden Beschreibung von in der Zeichnung schematisch dargestellten Ausführungsbeispielen. Es zeigen:
- Fig. 1: einen Längsschnitt durch einen Behälter wie er bei einer erfindungsgemässen Ausführungsform zur Anwendung kommen mag und eine Abhebeeinrichtung für den Angriff am Deckel eines angedockten Übernahmebehälters od.dgl. besitzt; und
- Fig. 2: ein Schaltschema einer erfindungsgemässen Überwachungseinrichtung.

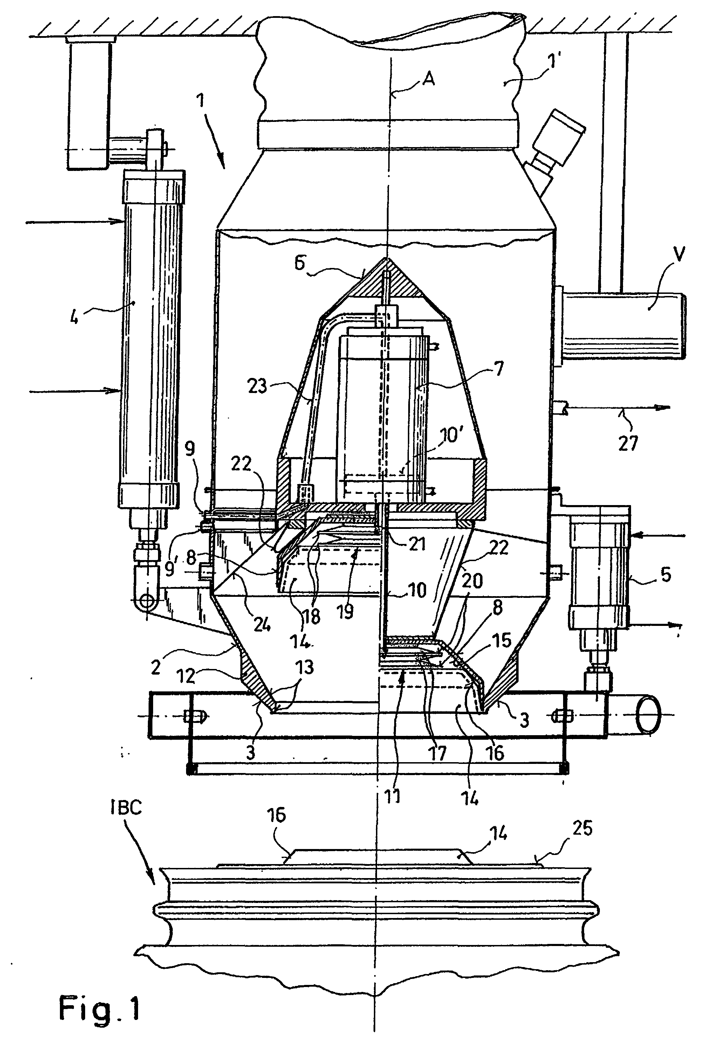

Gemäss Fig. 1 ist ein Behälter 1 für fliessfähiges Material, insbesondere für Schüttgut, vorgesehen, dem über eine Leitung 1' fliessfähiges Material zugeführt wird, und der an seinem unteren Ende einen Auslass 2 sowie eine etwa ringförmige Andockfläche 3 zum dichten Anlagen eines unter dem Behälter 1 mit seinem Oberteil angedeuteten Zwischentransportbehälters IBC oder eines das fliessfähige Gut übernehmenden Schlauches aufweist. Die Andockfläche 3 ist, wie ersichtlich, gegebenenfalls von an eine Ringleitung angeschlossenen Blasdüsen zum Reinigen umgeben. Beim Entleeren wird dann der Behälter 1 gegebenenfalls mit Hilfe eines Vibrators V gerüttelt. Der jeweilige Übernahmeteil kann mit Hilfe von Zylinderaggregaten 4, 5 an diese Andockfläche 3 herangezogen werden. Die Andockfläche 3 befindet sich vorzugsweise im Bereiche des Auslasses 2, doch kann sie sich auch etwas weiter oben befinden, wenn etwa der jeweilige Übernahmeteil bis höher hinauf gezogen wird.

Im Inneren des Behälters 1 ist ein von über seinen Umfang verteilten Streben 24 (nur eine ist in Fig. 1 sichtbar) gehaltener Kegel 6 vorgesehen, unter welchem sich ein Betätigungsorgan, wie ein Zylinderaggregat 7, ein Hubbalg oder ein Zylinder mit einer Rollmembrane, zum Betätigen eines etwa topfförmigen Verschlussgliedes 8 entlang einer vertikalen Betätigungsachse A gegen Einwirkungen des fliessfähigen Gutes bei seinem Ausfliessen ebenso gesichert ist, wie entsprechende pneumatische Zu- und/oder Ableitungen 9, 9'. Der ganze Bereich oberhalb des Verschlussgliedes 8 ist gegen Einwirkungen des fliessfähigen Materials durch eine Abdeckschürze 22, z.B. aus Kunststoffmaterial, abgedichtet, deren unterer Rand am Verschlussglied 8 befestigt ist, so dass sie sich bei der Aufwärtsbewegung des Verschlussgliedes 8 in der gezeigten Weise zusammenfaltet.

Durch dieses Zylinderaggregat 7 ist eine Kolbenstange 10 auf- und abbewegbar, welche zwei Funktionen ausübt: Einerseits ist daran das Verschlussglied 8 selbst auf- und abbewegbar, und anderseits wird mit dieser Kolbenstange 10 auch ein erfindungsgemäss ausgebildeter Saugnapf 11 mit doppelter Falte mitbewegt. In Fig. 1 zeigt die Seite links der Betätigungsachse A (die hier, allerdings nicht notwendigerweise, gleichzeitig die Längsachse des Behälters 1 ist) das Verschlussglied 8 in seiner Offenstellung, wogegen die rechte Seite die Geschlossenstellung veranschaulicht, in welcher das Verschlussglied 8 mit der Innenfläche 13 eines Dichtungselementes 12 zusammenwirkt. Dieses Dichtungselement 12 bildet nach aussen hin gleichzeitig die Andockfläche 3.

In dieser zuletzt erwähnten Geschlossenstellung liegt der Saugnapf 11 einem den jeweiligen Übernahmeteil abdeckenden Deckel 14 gegenüber. An sich wäre es möglich, das Zylinderaggregat 7 als Doppelzylinder auszubilden, bei dem etwa ein äusserer von zwei etwa konzentrischen Zylindern zur Betätigung des Verschlussgliedes 8 dient, wogegen der jeweilige innere Zylinder eine Relativbewegung des Saugnapfes 11 gegenüber dem Verschlussglied bewirken kann, wodurch der Saugnapf 11 nach dem Bewegen des Verschlussgliedes 8 in die in Fig. 1 rechts gezeigte Geschlossenstellung noch weiter auf einen in einem Abstand darunter liegenden Deckel 14 des Übernahmeteiles abgesenkt werden kann. Solche Doppelzylinder sind an sich bekannt, wobei der äussere Zylinder einen Ringkolben und eine hohle Kolbenstange aufweist, in der die innere Kolbenstange des inneren Zylinders geführt ist. Aus dieser Überlegung ist die vorteilhafte Doppelfunktion des Zylinders 7 als Betätigungseinrichtung für das Verschlussglied 7 und als Abhebeeinrichtung für den Deckel 14 ersichtlich. Wenn daher diese Einrichtungen im Zuge dieser Beschreibung und in den Ansprüchen gesondert genannt sind, so soll im Auge behalten werden, dass sie von einer einzigen, gemeinsamen Einrichtung gebildet sein können, wenn auch die Abhebeeinrichtung eine Saugleitung mit umfasst, die noch beschrieben wird.

Die Konstruktion wird aber wesentlich vereinfacht, wenn, wie dargestellt, der Saugnapf 11 im Moment des Endes der Bewegung des Verschlussgliedes 8 auch schon an der Oberfläche des Deckels 14 anliegt, weil dann ja nur ein einfaches Zylinderaggregat 7 nötig ist, welches dem oben erwähnten doppelten Zweck dient. Um dies leichter zu erreichen, ist es vorteilhaft, wenn der Deckel 14 in der dargestellten Weise eine, zweckmässig komplementäre, in eine Konusfläche 15 des Verschlussgliedes 8 ragende zweite Konusfläche 16 besitzt. Es versteht sich, dass die beiden Konusflächen 15, 16 nicht unbedingt komplementär sein, d.h. gleiche Winkel zur Betätigungsachse A haben, müssen. Kleine Abweichungen der Winkellage schadet nichts, wenn es auch bevorzugt ist, wenn die Winkellage einander ergänzend ist, weil dann diese Flächen nicht etwa nur entlang einer Linie aneinander liegen und sich so jeweils eine Dichtungsfläche und eine Gegen-Dichtungsfläche ausbildet, entlang derer die Innenfläche des Verschlussgliedes 8 und die Aussenfläche des Deckels 14 dichtend aneinanderliegen. Dies kann bevorzugt noch dazu ausgenützt werden, den Saugnapf 11 völlig wegzulassen und damit die Konstruktion weiter zu vereinfachen und betriebssicherer zu gestalten.

Wie ersichtlich, weist der Saugnapf eine balgartige Konfiguration mit zwei Verengungen 17 auf, die abwechselnd mit Erweiterungen 18 zur Bildung von Falten vorgesehen sind. Dies verleiht dem Saugnapf 11 eine besondere Flexibilität, so dass sich der seine untere Saugöffnung 19 begrenzende Rand leichter an Unebenheiten des Deckels, an durch seine eigene Abnützung verursachte Unebenheiten des Randes oder an eine durch am Deckel aufliegendes Schüttgut verursachte Unebenheiten anpassen und damit trotz dieser misslichen Umstände der Angriff des Saugnapfes 11 am Deckel 14 und das Anheben des Deckels 14 aus der rechts gezeigten Geschlossenstellung in die links gezeigte, angehobene Offenstellung gesichert wird.

In Fig. 1 sind zwei von Verengungen und einer dazwischenliegenden Erweiterung gebildete Falten 20 des Saugnapfes 11 gezeigt. Werden mehr als drei solcher Falten 20 vorgesehen, so wird der Saugnapf 11, wie sich gezeigt hat, meist zu weich und kann dann rüsselartig und pendelnd herabhängen, so dass auf Grund seiner unbestimmten, durch Vibrationen leicht zu beeinflussenden Lage wiederum sein Angriff am Deckel nicht so leicht gesichert sein mag, wenn dieses Verhalten nicht durch geeignete Wahl eines steiferen Materials gebessert wird. Da aber steiferes Material sich weniger gut für die vorliegenden Anforderungen eignet, ist es bevorzugt, wenn der elastische Saugnapf 11 nicht mehr als drei verengte Falten 20, vorzugsweise nicht mehr als zwei Verengungen 17, aufweist. Damit wird gerade den einander widersprechenden Anforderungen eines flexiblen und ausgleichenden Angriffs des die Saugöffnung 19 begrenzenden Randes des Saugnapfes 11 und einer definierten Lage (horizontal und möglichst senkrecht zur Betätigungsachse A) dieses Randes, weitgehend unbeeinflusst von Vibrationen im rauhen Alltagsbetrieb, Genüge getan. Der Unterdruck wird zum Saugnapf 11 von einem (nicht dargestellten, an sich bekannten) Vakuumaggregat, wie einem Sauggebläse, einem Injektor oder einer Pumpe, über eine Saugleitung 21 herangeführt, die zweckmässig wenigstens zum Teil als Bohrung innerhalb der betätigenden Kolbenstange 10 eines Kolbens 10' ausgeführt ist, zu welcher der Unterdruck über eine an ihr vorgesehenen Radialbohrung, einen entsprechenden Anschlussnippel und einen mit der Leitung 9 in Verbindung stehenden Schlauch 23 herangeführt sein mag.

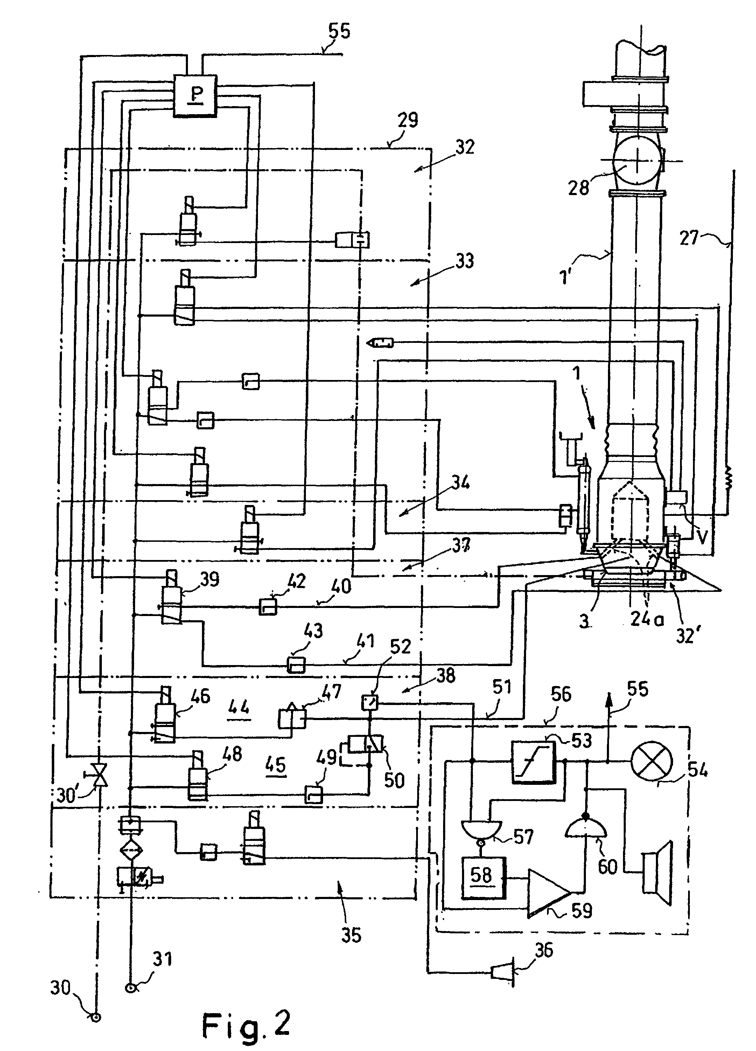

In Fig. 2 ist wiederum der Behälter 1 zu sehen, der zum Ablassen von beim Übertragen fliessfähigen Materials entweichender Luft in an sich bekannter Weise an eine Pendelleitung 27 angeschlossen ist. Die Zufuhr fliessfähigen Materials erfolgt über die schon genannte Leitung 1', an deren oberen Ende eine Zellenradschleuse 28 gelegen ist, so dass der Behälter 1 gegebenenfalls ohne nennenswerte Gasverluste in Richtung oberhalb der Zellenradschleuse 28 beispielsweise unter Inertgasatmosphäre gehalten werden kann.

Dem Behälter 1 ist ein Steuerschrank 29 zugeordnet, der zwei Versorgungsanschlüsse 30, 31 besitzt, von welchen der Anschluss 30 der Zufuhr von Inertgas, wie Stickstoff, mit einer vorbestimmten Nenn-Strömungsmenge pro Zeiteinheit, beispielsweise zwischen 100 und 150 Normal-m³/h, und einem vorbestimmten Nenndruck von beispielsweise 2,5 bis 4,5 bar, dient. Der Anschluss 30 wird nur im nötigenfalls geöffnet und ist normalerweise durch ein Ventil 30' verschlossen. Der Anschluss 31 mag zur Zufuhr von Druckluft etwa gleichen Druckes wie das Inertgas, gegebenenfalls aber mit geringerer Strömungsmenge, wie 30 bis 50 Normal-m³/h, vorgesehen sein.

Innerhalb des, vorzugsweise explosionsgeschützt ausgebildeten, Steuerschrankes 29 ist eine erste Baugruppe 32 pneumatischer Steuerelemente für die Abreinigung über eine Einheit 32', eine zweite Baugruppe 33 zur Betätigung der Zylinder 4, 5 und eine dritte Baugruppe 34 zur Steuerung des Vibrators V. Femer ist noch eine weitere Baugruppe 35 der Steuerung zu erwähnen, die zur Ansteuerung eines auf den hier nicht dargestellten IBC wirkenden Klopfers 36 zum Abklopfen von an ihm anhaftenden fliessfähigen Material dient. Diese Baugruppen sind an sich herkömmlicher Natur und brauchen daher nicht im einzelnen beschrieben zu werden. Wie ersichtlich, sind die im Steuerschrank 29 vorhandenen schaltbaren Ventile im allgemeinen elektromagnetische Ventile, die entweder von manuell betätigbaren, nicht dargestellten Schaltern oder - bevorzugt - über von einem Programmwerk P (Fig. 4), wie einem Mikroprozessor, betätigbaren Schaltstufen angesteuert werden, welches Programmwerk, z.B. mittels eines in einem Speicher gespeicherten Programms, die nachfolgend beschriebenen Schritte zu steuern vermag. Das Programmwerk P beinhaltet im Falle der Fig. 4 natürlich auch alle nötigen Ansteuerstufen und Schalter für die daran angeschlossenen elektromagnetischen Ventile.

Die ferner noch dargestellten Baugruppen 37, 38 stehen in engem funktionellen Zusammenhang und stellen daher den zweckmässigsten Ausgangspunkt für eine Programmsteuerung P dar, die im einfachsten Fall von Zeitrelais und anderen Schaltelementen, wie Positionssensoren, ausgeführt werden kann. Von diesen dient die Baugruppe 38 der Steuerung des Sauger-Zylinders 7 zum Auf- bzw. Abwärtsfahren des Saugnapfes 11, 11a bzw. des Verschlussgliedes 8, 8a oder 8b. Die Baugruppe 38 dient dem Ansaugen des Deckels 14 oder 14a bzw. dem Ausblasen von Druckluft.

Nach dem Andocken des IBC mittels der Zylinder 4, 5 unter Steuerung durch die Baugruppe 33 tritt die Baugruppe 37 in Tätigkeit. Dies kann, wie erwähnt, durch manuelles Auslösen oder durch die Programmsteuerung erfolgen. Diese Baugruppe 37 weist ein elektromagnetisches Schaltventil 39 mit einem mit der Zufuhrleitung 31 verbundenen Eingang und zwei Ausgängen 40, 41 auf. In jedem dieser Ausgänge 40, 41 ist ein den Ausgangsdruck bestimmendes Ventil 42, 43 vorgesehen. Die von diesen Ventilen 42, 43 abgehenden Ausgangsleitungen 40, 41 führen zum Anschluss 9' (Fig. 1) sowie zu einem weiteren, die entgegengesetzte Seite des Zylinders 7 beaufschlagenden, in Fig. 1 nicht dargestellten Anschluss, wobei für die Leitungsführung zweckmässig Streben 24a (vgl. 24 in Fig. 1) herangezogen werden.

Die Baugruppe 38 ist etwas komplizierter ausgeführt und weist einen ersten Pfad 44 zum Ansaugen von Luft über den Saugnapf 11 oder 11a bzw. das als Saugnapf ausgebildete Verschlussglied 8a oder 8b auf. Der Pfad 45 dagegen dient zum Durchblasen von Luft, durch diese Teile und die zugehörigen Zufuhrleitungen, wie unten noch beschrieben wird. Der Saugpfad 44 weist im wesentlichen ein elektromagnetisches Schaltventil 46 und eine nachgeschaltete Venturidüse auf. Der Druckpfad 45 besitzt ebenfalls ein elektromagnetisches Schaltventil 48 als Initiierungsglied für diesen Pfad und nachgeschaltet ein Druckregulierventil 49, das auf einen vorbestimmten Druckwert, z.B. zwischen etwa 1,2 bis 1,9 bar, eingestellt ist. Dahinter liegt ein druckabhängig geschaltetes Ventil 50, das sich nur dann öffnet, wenn über das Schaltventil 48 der Nenn-Druck an seinem Eingang ansteht. Es versteht sich, dass die elektrische Schaltung für die beiden elektromagnetischen Ventile 46, 48 so gestaltet ist, dass ein gleichzeitiges Öffnen beider Ventile, 46, 48 ausgeschlossen ist. Daher ist es auch möglich, dass beiden Pfaden 44, 45 eine gemeinsame Ausgangsleitung 51 zugeordnet ist.

Nach einer bevorzugten Ausführung ist die Betriebsweise (und gegebenenfalls ein zugehöriges Programm), wie folgt. Zunächst wird mittels der Komponenten 32, 32' durch Abblasen des Andockbereiches (Fläche 3) gesichert, dass beim Andocken die Dichtheit gesichert ist. Dann wird der Zwischenbehälter IBC durch entsprechende Betätigung der Zylinder 4, 5 über die Steuerung 33 so angedockt, dass sein Dichtungskragen 25 an der Dichtungsfläche 3 dicht anliegt. In diesem Zustand ist das Verschlussglied 8 in der in Fig. 1 rechts gezeigten Geschlossenstellung, in der es an der Innenfläche 13 des Dichtungselementes 12 anliegt. Da beim dargestellten Ausführungsbeispiel das Verschlussglied 8 und der Saugnapf 11 gemeinsam vom Zylinder 7 betätigt werden, muss zu diesem Zeitpunkt der Saugnapf 11 dicht am Deckel 14 aufliegen. Andernfalls wäre erst der (gesonderte) Zylinder für den Saugnapf 11 zum weiteren Absenken zu betätigen.

Zunächst kann dann nach einer bevorzugten Ausführungsform eine Leitungsprüfung so erfolgen, dass Luft durch die Leitung 51 und das daran angeschlossene Leitungssystem 9, 21 entweder geblasen oder gesaugt wird (Ventil 46 oder 48 öffnet). Der sich dabei aufbauende Druckabfall bzw. der Absolutdruck (oder die Strömungsmenge) wird durch ein Sensorelement 52 überwacht, das auch ein Ventil umfassen kann. Dabei sind zwei vorteilhafte Betriebsweisen denkbar. Entweder wird Luft durchgeblasen, um so die Oberfläche des Deckels 14 zu reinigen und so ein sichere Ansaugen desselben zum Zwecke des Abhebens zu gewährleisten. Übersteigt der dabei aufgebaute Druck einen vorbestimmten Schwellwert (der beispielsweise mittels eines an das Sensorelement 52 angeschlossenen Schwellwertschalters 53 festgestellt werden kann), so bedeutet dies, dass das Leitungssystem 51, 9, 21 verstopft bzw. verschmutzt ist, und es wird über eine akustische und/oder optische Alarmeinrichtung 54 ein Alarm ausgelöst, der vorzugsweise über eine Ausgangsleitung 55 auch das weitere Programm abstellt. Es ist ersichtlich, dass also die Teile 53-55 eine Auswerteschaltung 56 darstellen, wobei die Auswerteschaltung 56 auch so funktionieren kann, dass anschliessend an das Blasen über den Pfad 45 eine Umschaltung auf Saugen über den Pfad 44 erfolgt, um vielleicht das Leitungssystem doch noch freizubekommen. Im einen Fall fungiert die Auswerteschaltung 56 als blosse Anzeige, im anderen Fall als Steuerung.

Die andere Möglichkeit liegt darin, dass zu Anfang Luft über das Leitungssystem 21, 9, 51 angesaugt und der sich aufbauende Unterdruck (oder die Strömung) mittels des Sensorelementes 52 bestimmt wird. Da das Saugen ja zur Aufnahme des Deckels 14 dient und ein zu hoher Unterdruck auf die Verstopfung des Leitungssystems hindeutet, wird in einem solchen Fall in der oben besprochenen, dieser entsprechenden Weise vorgegangen. Wird aber der Schwellwert des Unterdruckes nicht überschritten, so kann der bei diesem Saugversuch gemessene Wert dazu benützt werden, ihn als NORMAL-Wert des Unterdrucks im Leitungssystem heranzuziehen und als solchen zu speichern. Dies kann so erfolgen, dass an den Ausgang des Schwellwertschalters 53 ein NAND-Gatter 57 geschaltet wird, das seinen anderen Eingang vom Sensor 52 bezieht. Nur wenn der vom Sensor 52 gelieferte Wert den Schwellwert des Schalters 53 nicht überschreitet, wird das NAND-Gatter geöffnet und der entsprechende, vom Sensor gelieferte Wert an einen Speicher 58 abgegeben. Dabei kann entweder der Sensor 52 bereits ein digitales Signal liefern, oder es ist ein A/D-Wandler dem NAND-Gatter 57 nachgeschaltet oder in den Speicher 58 integriert. Alternativ kann der Sensor 52 selbst als Schwellwertglied ausgebildet sein, indem er nur dann anspricht, wenn ein vorbestimmter Druck (oder eine vorbestimmte Strömung) erreicht wird.

Nun wird in jedem Falle das Ventil 46 derart geschaltet, dass Saugluft über die Venturidüse 47 an die Leitung 51 gelangt, so dass der Deckel 14 (oder 14a) vom Saugnapf 11 (oder 11a bzw. 8b) angesaugt wird. Dieser Unterdruck wird durch das Sensorelement 52 im Pfad 44 (oder durch ein entsprechendes strömungsbestimmendes Glied) überwacht. Stellt sich nicht ein gegenüber dem im Speicher 58 gespeicherten Wert oder einem vorbestimmten (z.B. durch einen mit dem Sensor 52 verbundenen, beispielsweise vom Schwellwertschalter 53 gebildeten oder dazu parallelen Schwellwertschalter eingestellten) SOLL-Wert zu geringer Unterdruck ein, so bedeutet das, dass der Deckel 14 nicht richtig angesaugt wurde, und es wird wiederum ein Alarmsignal an die Alarmeinrichtung 54 abgegeben. Über die Leitung 55 kann gewünschtenfalls das Programm veranlasst werden, den Versuch durch neuerliches Hochheben und Absenken des Saugnapfes 11 zu wiederholen, falls der Saugnapf gesondert vom Verschlussglied bewegbar ist. Eine andere Möglichkeit der Auswertung besteht darin, dass eine Vergleichsstufe 59 vorgesehen ist, die den gespeicherten Wert des Speichers 58 mit dem aktuellen, vom Sensor 52 gemessenen Wert vergleicht und bei ungenügendem Unterschied entweder über einen Schwellwertschalter oder einen Inverter 60 den Alarm auslöst. Dies hat den Vorteil, dass der vom Speicher 58 gespeicherte SOLL-Wert Unterschiede im Leitungswiderstand berücksichtigen kann, wogegen bei Verwendung eines blossen Schwellwertschalters als Vergleichsstufe, wie dem Schalter 53, im allgemeinen nur ein voreingestellter Schwellwert zur eventuellen Alarmauslösung führt.

Sobald der Deckel korrekt angesaugt wurde, bewegt sich die Einheit aus Verschlussglied 8 und Saugnapf 11 samt Deckel 14 in die in Fig. 1 links gezeigte Offenstellung, und der IBC wird gefüllt. Dieser Vorgang kann entweder durch Messen des Niveaus im IBC oder des Absinkens des Niveaus im Behälter 1 oder durch Wägen des IBC überwacht werden. Sobald die gewünschte Menge an fliessfähigem Material in den IBC (oder einen anderen Übernahmeteil) übertragen worden ist, kann der Deckel 14 sowie das Verschlussglied 8 mittels der Baugruppe 37 über die Leitung 41 wiederum in die in Fig. 1 rechts gezeigte Geschlossenstellung gebracht werden. In dieser Stellung wird der Pfad 44 der Baugruppe 38 durch Schliessen des Ventiles 46 abgeschaltet und zweckmässig der Pfad 45 durch Öffnen des Ventiles 48 eingeschaltet. Zwar könnte das blosse Abschalten des Pfades 44 zum Lösen des Deckels 14 vom Saugnapf 11 ausreichen, doch ist ein zwangsweises Lösen durch Druckluft bevorzugt.

## Patentansprüche

1. Vorrichtung zum Übertragen fliessfähigen Materials, mit einem Behälter (1) für das fliessfähige Material, der mit einem Auslass (2) und mindestens einer Andockfläche (3) zum Andocken einer normalerweise von einem Deckel (14; 14a; 14b) abgeschlossenen Füllöffnung eines Übernahmeteils versehen ist, welcher Auslass (2) mit Hilfe eines Verschlussmittels (8) zu öffnen oder zu verschliessen ist, das mittels einer Betätigungseinrichtung (7) entlang einer Betätigungsachse (A) aus einer Offenstellung in eine Geschlossenstellung bringbar ist, und welcher Deckel (14; 14a; 14b) mit Hilfe einer an ihm angreifenden, mit Saugdruck wirkenden Abhebeeinrichtung (11, 21) zur Freigabe der Füllöffnung abhebbar ist, **dadurch gekennzeichnet, dass** eine Überwachungseinrichtung (52) für den Angriff am Deckel (14) vorgesehen ist, durch welche der Sitz des Deckels (14; 14a; 14b) an der Abhebeeinrichtung (11, 21) entweder direkt über einen zugehörigen Sensor oder indirekt durch Bestimmen des sich mit dem Deckel (14; 14a; 14b) aufbauenden Unterdrucks und/oder der Saugströmung überwachbar ist, und welche bei unrichtigem Sitz des Deckels (14; 14a; 14b) an der Abhebeeinrichtung (11, 21) ein Signal an eine Auswerteeinrichtung (56) abgibt.

2. Vorrichtung nach Anspruch 1, **dadurch gekennzeichnet, dass** der sich mit dem Deckel (14; 14a; 14b) aufbauende Unterdruck und/oder die Saugströmung überwachbar ist und zu diesem Zwecke an einer mit der Abhebeeinrichtung (11, 21) verbundenen Saugleitung (51) mindestens eine zugehörige Sensoreinrichtung (52) als überwachungseinrichtung vorgesehen ist, durch welche das genannte Signal an die Auswerteeinrichtung (56) abgebbar ist.

3. Vorrichtung nach Anspruch 2, **dadurch gekennzeichnet, dass** die Auswerteeinrichtung (56) mindestens eine Vergleichsstufe (53, 59) zum Vergleichen des gemessenen IST-Druckes und/oder der gemessenen IST-Strömung mit einem zugehörigen SOLL-Wert aufweist, und dass bei einer Abweichung vom SOLL-Wert, gegebenenfalls unter Berücksichtigung einer vorgegebenen Toleranz, ein Alarmsignal ausgelöst wird.

4. Vorrichtung nach Anspruch 2 oder 3, **dadurch gekennzeichnet, dass** mit Hilfe eines Sensorelementes bzw. der Überwachungseinrichtung (52) die Leitfähigkeit der Saugleitung (9, 21, 51) durch Bestimmen des sich aufbauenden Druckes, insbesondere Saugdruckes, und/oder der Saugströmung geprüft wird.

5. Vorrichtung nach Anspruch 4, **dadurch gekennzeichnet, dass** der geprüfte Wert mit Hilfe eines Speichergliedes (58) gespeichert und bei der Bestimmung des SOLLWertes berücksichtigt wird.

6. Vorrichtung nach einem der Ansprüche 6 bis 8, **dadurch gekennzeichnet, dass** eine Einrichtung (45) zum Durchblasen der pneumatischen Leitung (9, 21, 51) bzw. zum Abreinigen des Andockbereiches bzw. des Deckels (14; 14a; 14b) vorgesehen ist.

7. Vorrichtung nach Anspruch 6, **dadurch gekennzeichnet, dass** die Durchblaseeinrichtung (45) durch einen Initiierungsschaltglied (46) in Betrieb setzbar ist.

8. Vorrichtung nach einem der Ansprüche 2 bis 7, **dadurch gekennzeichnet, dass** ein Programmwerk (P) für eine vorbestimmte Abfolge von Betätigungen vorgesehen ist.

## Claims

1. A device for transferring flowable materials, with a container (1) for the flowable material, which container (1) is provided with an outlet (2) and at least one docking face (3) for docking to a filling aperture, normally obturated by a closure (14; 14a; 14b), of a receptacle, which outlet (2) is openable or closable by means of a locking means (8) which is movable by means of an actuating arrangement (7) along an axis of actuation (A) from an open to a closed position, and which closure (14; 14a; 14b) is upwardly removable by means of a lifting arrangement (11, 21) acting upon it and operating with suction pressure to unblock the filling aperture, **characterised in that** a monitoring arrangement (52) is provided for the action upon the closure (14) whereby the fit of the closure (14; 14a; 14b) on the lifting arrangement (11, 21) can be monitored either directly by means of an associated sensor or indirectly by determining the partial vacuum and/or suction flow building up with the closure (14; 14a; 14b), and which monitoring arrangement (52) sends a signal to an evaluation arrangement (56) in case of an incorrect fit of the closure (14; 14a; 14b) on the lifting arrangement (11, 21).

2. A device according to Claim 1, **characterised in that** the partial vacuum building up with the closure (14; 14a; 14b) and/or the suction flow is monitorable and **in that** for this purpose at least one associated sensor arrangement is provided as a monitoring arrangement (52) on a suction line (51) connected to the lifting arrangement (11, 21), by means of which monitoring arrangement (52) the above-mentioned signal can be sent to the evaluation arrangement (56).

3. A device according to Claim 2, **characterised in that** the evaluation arrangement (56) has at least one comparison step (53, 59) for comparing the measured actual pressure and/or the measured actual flow with an associated reference value, and **in that** in case of a deviation from the reference value, if applicable while respecting a predetermined tolerance, an alarm signal is triggered.

4. A device according to Claim 2 or 3, **characterised in that** by means of a sensor element or the monitoring arrangement (52) the flow capacity of the suction line (9, 21, 51) is tested by determining the accumulating pressure, in particular suction pressure, and/or the suction flow.

5. A device according to Claim 4, **characterised in that** the value tested is stored by means of a storage element (58) and allowed for in determining the reference value.

6. A device according to one of the Claims 6 to 8, **characterised in that** an arrangement (45) for blowing through the pneumatic line (9, 21, 51) and for cleaning the docking area and the closure (14; 14a; 14b) is provided.

7. A device according to Claim 6, **characterised in that** the blow-through arrangement (45) can be put into operation by means of an initiating switch element (46).

8. A device according to one of the Claims 2 to 7, **characterised in that** a program timer (P) is provided for a predetermined sequence of operations.

## Revendications

1. Dispositif pour transférer des produits fluides, équipé d'un réservoir (1) pour le produit fluide muni d'une sortie (2) et d'au moins une surface d'arrimage (3) pour arrimer un orifice de remplissage d'une pièce de prise normalement fermée par un couvercle (14, 14a, 14b), laquelle sortie (2) doit être ouverte ou fermée par un moyen de fermeture (8) qui peut être amené d'une position ouverte à une position fermée le long d'un axe d'actionnement (A) au moyen d'un dispositif de commande (7), et dont le couvercle (14, 14a, 14b) peut être soulevé au moyen d'un dispositif de levage (11, 21) ayant prise sur lui et agissant avec la pression d'aspiration pour libérer l'orifice de remplissage, **caractérisé en ce qu'**un dispositif de surveillance (52) est prévu pour la prise sur le couvercle (14), dispositif par lequel le siège du couvercle (14, 14a, 14b) sur le dispositif de levage (11, 21) peut être contrôlé soit directement par un capteur correspondant soit indirectement par la détermination de la sous-pression se constituant avec le couvercle (14, 14a, 14b) et/ou du courant d'aspiration, et lequel dispositif transmet un signal à un dispositif d'évaluation (56) lorsque le siège du couvercle (14, 14a, 14b) sur le dispositif de levage (11, 21) n'est pas correct.

2. Dispositif selon la revendication 1, **caractérisé en ce que** la sous-pression se constituant avec le couvercle (14, 14a, 14b) et/ou le courant d'aspiration peut être contrôlée et qu'à cet effet au moins un dispositif de capteurs correspondant est prévu comme dispositif de surveillance sur une conduite d'aspiration (51) raccordée au dispositif de levage (11, 21), par lequel dispositif le signal déjà mentionné peut être transmis au dispositif d'évaluation (56).

3. Dispositif selon la revendication 2, **caractérisé en ce que** le dispositif d'évaluation (56) présente au moins une étape de comparaison (53, 59) pour comparer la pression REELLE mesurée et/ou le courant REEL mesuré à une valeur THEORIQUE correspondante, et **en ce qu'**un signal d'alarme est déclenché en cas de déviation de la valeur THEORIQUE, éventuellement en prenant en compte une tolérance prédéfinie.

4. Dispositif selon la revendication 2 ou 3, **caractérisé en ce que** la conductibilité de la conduite d'aspiration (9, 21, 51) est vérifiée à l'aide d'un élément de capteur ou du dispositif de surveillance (52) en déterminant la sous-pression se constituant, notamment la pression d'aspiration, et/ou le courant d'aspiration.

5. Dispositif selon la revendication 4, **caractérisé en ce que** la valeur vérifiée est mémorisée au moyen d'un élément de mémoire (58) et est prise en considération lors de la détermination de la valeur THEORIQUE.

6. Dispositif selon l'une des revendications 6 à 8, **caractérisé en ce qu'**un dispositif (45) pour purger la conduite pneumatique (9, 21, 51) ou pour nettoyer la partie d'amarrage ou le couvercle (14, 14a, 14b) est prévu.

7. Dispositif selon la revendication 6, **caractérisé en ce que** le dispositif de purge (45) peut être mis en service par un élément de commutation d'initialisation (46).

8. Dispositif selon l'une des revendications 2 à 7, **caractérisé en ce qu'**une horloge programmatrice (P) est prévue pour une séquence prédéfinie de commandes.
